# EUROPEAN PATENT SPECIFICATION

(11) **EP 2 689 897 B1**
(45) Date of publication and mention of the grant of the patent: **20.12.2017**
(21) Application number: 12760680.4
(22) Date of filing: 29.02.2012
(51) Int. Cl.: B25F 5/00, H02K 9/06, H02K 11/00, H02K 11/33

(54) **POWER TOOL**
ELEKTROWERKZEUG
OUTIL MOTORISÉ

(30) Priority: 23.03.2011 JP 2011063609
(43) Date of publication of application: 29.01.2014
(73) Proprietor: Panasonic Intellectual Property Management Co., Ltd., Osaka-shi, Osaka 540-6207 (JP)
(72) Inventor: MATSUMOTO, Hiroshi, Chuo-ku, Osaka 540-6207 (JP)
(74) Representative: Appelt, Christian W.
(86) International application number: PCT/JP2012/055052
(87) International publication number: WO 2012/128004

(56) References cited:
- WO-A1-2010/020456
- DE-A1-102008 050 383
- JP-A- 2005 253 184
- JP-A- 2008 125 296
- JP-A- 2008 307 664
- JP-A- 2010 214 518
- JP-A- 2010 214 518
- JP-A- 2011 142 801

## Description

### TECHNICAL FIELD

The invention relates to an electric tool including a brushless motor.

### BACKGROUND ART

In an electric tool, a brushless motor is preferably used because it is small in size and has a long-life. However, the brushless motor requires a circuit board provided with a switching element, and accordingly requires a cooling method since the switching element generates heat.

Japanese Patent Application Publication No. 2004-357371 (hereinafter, referred to as "Patent Document 1") discloses a device that includes a heat radiation member to be transferred the heat generated in the switching element. In the device, the heat radiation member is blown with a cooling wind, and thereby the switching element is cooled.

However, in some kinds of electric tools, the configuration described in the Patent Document 1 of blowing a cooling wind to a heat radiation member cannot provide sufficient cooling efficiency of the switching element. With regard to this problem, it may be considered to improve the heat radiation property of the switching element. However, this configuration causes a difficulty of downsizing the arrangement of switching elements, and causes an increase in size of the tool.

JP 2010 214518 A describes a power tool including switching elements for driving a brushless motor, a circuit board where the switching elements are mounted, and a power transmitting part for rotating a tip end tool by transmitting the revolving force of the motor, the circuit board is fixed to the motor and a heat radiation member is disposed on the circuit board through an insulating material with good thermal conductivity. The heat radiation member is a large plate-like metal covering an entire area of the circuit board where the switching elements are mounted. An upper part of the heat radiation member is folded back and connected to a stator of the motor.

### DISCLOSURE OF THE INVENTION

The invention is developed in view of above problem, and an object of the invention is to provide an electric tool capable of enhancing a cooling efficiency of the switching element, while suppressing the increase in size of the tool.

In order to resolve the above problem, an electric tool of the invention has a configuration as defined by independent claim 1. Preferred embodiments are described in dependent claims 2 to 9.

An electric tool of the invention includes: a brushless motor comprising a rotor and a cylindrical stator surrounding the rotor; a circuit board provided with a switching element for controlling rotation of the rotor; a heat radiation member to be transferred heat from the switching element; a cooling fan for generating a cooling wind; and a body housing which houses therein the brushless motor, the circuit board, the heat radiation member, and the cooling fan, and which has a cooling passage for passing therethrough the cooling wind. The cooling passage is formed so that the cooling wind flows from a center side toward an outer periphery of the heat radiation member and thereafter flows over a surface of the circuit board, the surface facing the brushless motor.

It is preferable that the cooling passage is formed so that the cooling wind flows through a gap between the stator and the rotor after flowed over the surface of the circuit board, the surface facing the brushless motor.

It is preferable that: a rotation shaft to which the rotor is fixed; a bearing which rotatably supports the rotation shaft; and a bearing support which supports the bearing, are housed in the body housing. The cooling passage is formed so that the cooling wind flows along the bearing support.

It is preferable that the heat radiation member has a protrusion portion elongated along a flowing direction in the cooling passage.

It is preferable that the circuit board has a first surface and a second surface opposite the first surface, the heat radiation member is shaped like a plate and has a first surface and a second surface opposite the first surface, the circuit board is disposed so that the second surface thereof faces the brushless motor and that a first gap is formed between an outer periphery thereof and an inner surface of the body housing, the switching element is mounted on the first surface of the circuit board, and the heat radiation member is disposed so that the second surface thereof faces the first surface of the circuit board and that a second gap is formed between the outer periphery thereof and the inner surface of the body housing. With this configuration, the cooling passage is formed so that the cooling wind flows from the center side toward the outer periphery of the heat radiation member at the first surface side of the circuit board, and then flows through the second and the first gaps, and thereafter flows along the circuit board at the second surface side of the circuit board.

It is preferable that the cooling passage is formed so that the cooling wind flows toward the center of the heat radiation member in a direction crossing the first surface of the heat radiation member.

It is preferable that a rib is formed on the inner surface of the body housing to be protruded toward the stator so as to restrict the flow of the cooling wind.

It is preferable that the cooling passage is formed so that the cooling wind flows toward the bearing support.

It is preferable that the switching element is thermally coupled with the heat radiation member.

It is preferable that a rotation shaft to which the rotor is fixed is housed in the body housing, and the cooling fan is fixed to the rotation shaft.

The invention has an effect of enhancing a cooling efficiency of the switching element, while suppressing the increase in size of the tool.

### BRIEF DESCRIPTION OF DRAWINGS

FIG. 1 is a cross-sectional view showing a body part of an electric tool according to an embodiment of the invention;
FIG. 2 is a perspective view of the electric tool according to the embodiment;
FIG. 3 is a partially broken side view of the electric tool according to the embodiment;
FIG. 4 is a perspective view of a motor block in the electric tool according to the embodiment;
FIG. 5 is a perspective view of the motor block shown in FIG. 4 of which bearing and heat radiation member are detached;
FIG. 6 is a rear view of the heat radiation member according to the embodiment; and
FIG. 7 is a rear view of another heat radiation member according to the embodiment.

### DESCRIPTION OF EMBODIMENTS

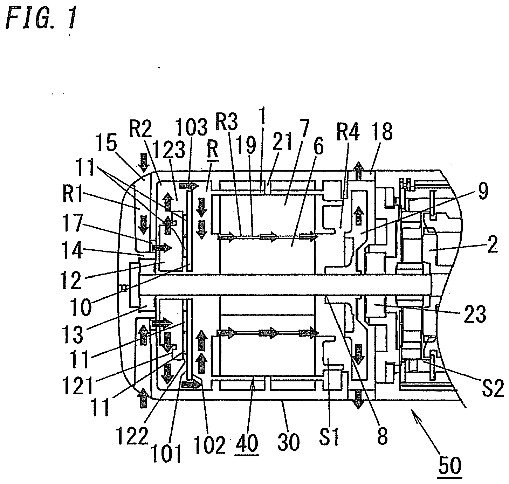

The invention is described based on an embodiment illustrated in attached drawings. An electric tool according to the embodiment of the invention is a portable electric drill-driver 50 shown in FIGS. 1 to 3.

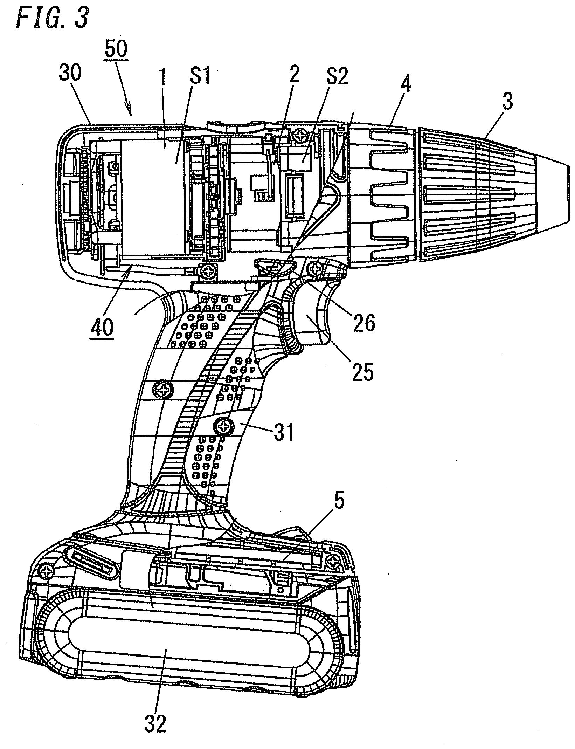

As shown in FIG. 3, the electric drill-driver 50 includes a body housing 30 that constitutes an outer shell of a body part of the electric drill-driver 50. The body housing 30 is shaped like a hollow cylinder, and has thereinside a motor storage space S1 and a mechanism storage space S2 that communicate with each other. A rib 21 is formed to be protruded from an inner surface of the motor storage space S1 of the body housing 30 along a whole circumference thereof. A brushless motor 1 (hereinafter referred to also as "motor 1") as a drive source is arranged in the motor storage space S1. As shown in FIG. 1, a rotation shaft 8, a circuit board 10 provided with switching elements 11, a heat radiation member 12, a cooling fan 9 for generating a cooling wind, and a bearing 13 that rotatably supports the rotation shaft 8, are also arranged in the motor storage space S1. In addition, a cooling passage (air channel) R through which the cooling wind passes is formed in the motor storage space S1. A power transmission mechanism 2 is arranged in the mechanism storage space S2. The power transmission mechanism 2 is connected with the motor 1 on the same axis.

A chuck 3 for holding a tool bit (not shown) is provided at a tip (right end in FIG. 3) of the body housing 30. The power transmission mechanism 2 is formed of planetary reduction gears, and transmits the driving power of the motor 1 to the tool bit held by the chuck 3. Moreover, an adjustment handle 4 of a torque limiter is provided on an outer peripheral surface of the body housing 30.

A grip housing 31 is formed to extend from the body housing 30. A trigger switch 25 and a forward-reverse selector lever 26 are provided at a root region of the grip housing 31. A control circuit 5 for controlling electricity supply to the motor 1 is housed in an end part (lower end in FIG. 3) of the grip housing 31. A battery pack 32 including a built-in secondary cell is detachably attached to an end surface (lower side surface in FIG. 3) of the grip housing 31. The secondary cell of the battery pack 32 supplies electricity to the control circuit 5 and the motor 1 according to the trigger switch 25.

In the following description, the direction from the motor 1 to the power transmission mechanism 2 (i.e., right side in FIG. 3) is referred to as "front", and the direction opposite thereto (i.e., left side in FIG. 3) is referred to as "rear". Moreover, the extending direction of the grip housing 31 from the body housing 30 (i.e., lower side in FIG. 3) is referred to as "down", and the direction opposite thereto (i.e., upper side in FIG. 3) is referred to as "up". Moreover, the direction perpendicular to both the up-down direction and the front-rear direction (i.e., front-back direction in FIG. 3) is referred to as "right-left direction".

The motor 1 includes a rotor 6 having a magnet and a stator 7 having a coil. The rotor 6 is surrounded by the stator 7 shaped like a hollow cylinder. The rotation shaft 8 penetrates through a center of the rotor 6 and is fixed thereto. The rotor 6 is driven to rotate together with the rotation shaft 8 in response to an electromagnetic force which is generated by controlling electricity supplied to the coil of the stator 7.

The rotation shaft 8 extends forward from the rotor 6 and the stator 7. The front end of the rotation shaft 8 is coupled with the power transmission mechanism 2. The cooling fan 9 is fixed to a portion of the rotation shaft 8, at a position forward of the rotor 6 and the stator 7. The cooling fan 9 is constituted by a centrifugal fan for generating a cooling wind (cooling air). The cooling fan 9 draws forward air from a rearward-space (i.e., draws air from left to right in FIG. 1), and emits the air outward in a radial direction.

The rotation shaft 8 also extends rearward from the rotor 6 and the stator 7. The rear end of the rotation shaft 8 is rotatably supported by the bearing 13 (first bearing). Note that, the circuit board 10 and the heat radiation member 12 (described in detail later) are provided with through holes through which the rotation shaft 8 is inserted. It is preferable that diameters of these through holes are substantially same with (slightly larger than) an outer diameter of the rotation shaft 8. In the embodiment, the rotation shaft 8 is supported by a bearing 23 (second bearing) at a position forward of a position where the cooling fan 9 is fixed. A rear surface (left end in FIG. 1) of the bearing 23 is exposed to a cooling passage R (specifically, an air passage R4 described later). Note that, the rotation shaft 8 may be supported by the bearing 23 at another position (for example, at a position between the cooling fan 9 and the rotor 6, or a position inside the power transmission mechanism 2).

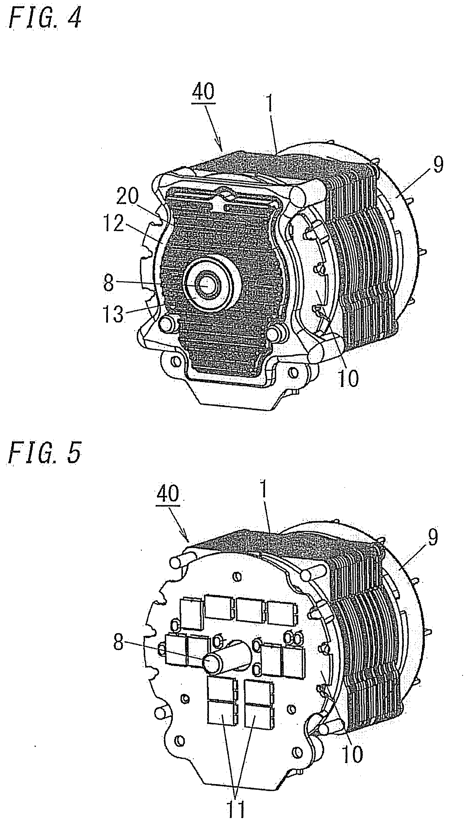

As shown in FIG. 5, a plurality of switching elements 11 are laid along and mounted on a rear surface 101 of the circuit board 10 (i.e., on a first surface of the circuit board 10). The switching elements 11 are adapted to regulate the rotation of the rotor 6 by controlling the electricity supplied to the coil held in the stator 7. The switching element 11 is constituted by e.g., a semiconductor switching element such as a MOSFET. As shown in FIG. 1, the circuit board 10 is fixed to the motor 1 such that a front surface 102 thereof (i.e., a second surface of the circuit board 10) faces a rear surface of the motor 1 with leaving a predetermined clearance therebetween. The heat radiation member 12 is shaped like a plate, and is fixed at a position rearward of the circuit board 10 (i.e., at the first surface 101 side of the circuit board 10). A heat conduction body having flexibility (such as a resin sheet having heat conduction property) is disposed between a front surface 122 of the heat radiation member 12 (i.e., a second surface of the heat radiation member 12) and the switching element 11 so as to fill up a space between them (11 and 12). Alternatively, the switching element 11 may be in direct contact with the heat radiation member 12. In other words, the heat radiation member 12 is in contact with the switching element 11 directly or through a heat conduction member. Thus, the heat radiation member 12 and each of the switching members 11 are thermally coupled with each other.

As shown in FIG. 4, the motor 1, the rotation shaft 8, the cooling fan 9, the circuit board 10, the heat radiation member 12 and the bearing 13 are assembled to form a motor block 40 as one body, and are housed in the motor storage space S1 inside the body housing 30. FIG. 5 shows the motor block 40 (shown in FIG. 4) of which the bearing 13 and the heat radiation member 12 are detached. As shown in FIG. 1, the motor block 40 is arranged such that an axis direction of the rotation shaft 8 substantially parallels to an axis direction of the body housing 30. The circuit board 10 and the heat radiation member 12 are arranged such that respective normal vectors thereof substantially parallel to the axis direction of the rotation shaft 8. The rotation shaft 8 is inserted in the respective through holes of the circuit board 10 and the heat radiation member 12. The bearing 13, the heat radiation member 12, the circuit board 10, and the motor 1 are arranged in that order from the rear side (i.e., from the upper stream end of the cooling passage R) in the body housing 30. In the embodiment, a top surface of the rib 21 is in contact with an outer peripheral surface of the stator 7 (i.e., an outer peripheral surface of the motor 1) (see FIG. 1).

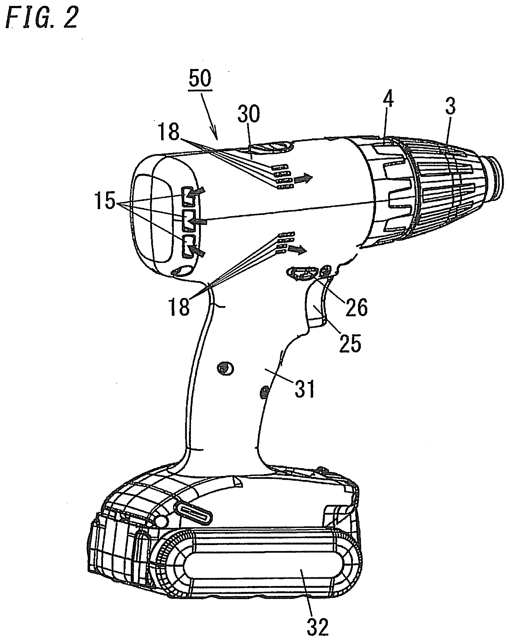

As shown in FIG. 1, the body housing 30 is, at a rear end thereof, provided integrally with a bearing support 14 shaped like a hollow cylinder for holding the bearing 13. An air passage R1 is formed at the rear end of the body housing 30 so as to surround the bearing support 14. The air passage R1 is formed in an L-shape in cross-section that connects from an inlet 15 to a rear end of the motor storage space S1 through an outer surface of the bearing support 14. In the embodiment, the air passage R1 is formed so that a cooling wind flows toward the bearing support 14. The inlets 15, i.e. upper stream ends of the air passages R1, are formed to open at right and left sides of the rear end of the body housing 30 (see FIG. 2). Outlets 17 are formed to open frontward towards the motor storage space S1 at positions surrounding the top of the bearing support 14, and constitute downstream ends of the air passages R1. In the embodiment, the body housing 30 is provided with a plurality of air passages R1, as shown in FIG. 2. The respective outlets 17 of the plurality of air passages R1 communicate with the motor storage space S1.

The motor block 40 is housed in the motor storage space S1 such that a center part (in the vicinity of the through hole formed at the center) of the heat radiation member 12 faces the outlets 17 of the air passages R1. In other words, in the embodiment, the cooling passage R is formed so that the cooling wind flows toward the heat radiation member 12 in a direction crossing the rear surface 121 of the heat radiation member 12 (the first surface of the heat radiation member 12). The circuit board 10 and the heat radiation member 12 are arranged side by side with the switching elements 11 interposed therebetween. Moreover, each of the circuit board 10 and the heat radiation member 12 is arranged to secure a space between an outer periphery thereof (10 or 12) and the inner surface of the body housing 30 so that the cooling wind can pass therethrough. In other words, a gap (first gap) 103 is formed between the outer periphery of the circuit board 10 and the inner surface of the body housing 30. In addition, a gap (second gap) 123 is formed between the outer periphery of the heat radiation member 12 and the inner surface of the body housing 30. The body housing 30 is provided with exhaust openings 18 for emitting the cooling wind therethrough, at positions of outer side of the cooling fan 9 in the radial direction (see FIGS. 1, 2).

The cooling wind is generated by the rotation of the cooling fan 9 which is disposed forward of the motor 1. The cooling wind passes forward through the cooling passage R formed in the body housing 30 (see arrows shown in FIG. 1). The cooling passage R is formed of a continuous space that communicates the inlets 15 and the exhaust openings 18, where the exhaust opening 18 is located forward of the inlets 15.

Specifically, the cooling passage R is formed of air passages R1 R2, R3, and R4 which are formed continuously from the rear side to the front side. The air passage R1 is formed to pierce the rear end of the body housing 30. The air passage R2 is a passage continuing from a region around the center of the heat radiation member 12, through regions around the peripheries of the heat radiation member 12 and the circuit board 10, to a region at the front surface 102 side of the circuit board 10. The air passage R3 is formed of a gap (third gap) 19 between the rotor 6 and the stator 7. The air passage R4 is a passage formed to connect the gap 19 and the exhaust opening 18.

Described in detail, in the embodiment, the cooling passage R includes the air passage (first air passage) R1, the air passage (second air passage) R2, the air passage (third air passage) R3 and the air passage (fourth air passage) R4. The air passage R1 is constituted by an air channel formed in the rear end of the body housing 30 so as to connect the inlet 15 and the motor storage space S1. The air passage R2 includes: a space between the rear surface 121 of the heat radiation member 12 and the body housing 30; the second gap 123; the first gap 103; and a space between the front surface 102 of the circuit board 10 and the rear surface of the motor 1. The air passage R3 is constituted by the gap 19 between the rotor 6 and the stator 7. The air passage R4 is constituted by a space connecting the gap 19 and the exhaust opening 18 at the front side of the motor 1. The cooling fan 9 is arranged in the cooling passage R (specifically, in the air passage R4). As described above, the cooling fan 9 is designed to draw exterior air (as cooling wind) through the inlets 15 into the cooling passage R, and emit the indrawn air through the exhaust openings 18 to outside.

The cooling wind of the cooling passage R is firstly flown in the air passage R1 through the inlet 15, and thereafter passes in the air passage R1 along the outer side surface of the cylindrical bearing support 14, thereby cooling the bearing support 14 and the bearing 13.

The cooling wind is thereafter discharged into the air passage R2 through the outlet 17 of the air passage R1. The cooling wind is then blown to the center part of the rear surface 121 of the heat radiation member 12, flows from the center side toward the outer periphery (toward at least a part or whole of the outer periphery of the heat radiation member 12) along the rear surface 121 of the heat radiation member 12, and flows forward around the outer peripheries of the heat radiation member 12 and the circuit board 10, in the air passage R2. The cooling wind then flows along the front surface 102 of the circuit board 10 inward in the radial direction, and flows into the air passage R3. The cooling wind then passes through the air passage R3, and flows into the air passage R4. The cooling wind then passes through the cooling fan 9 and is then discharged through the exhaust opening 18 toward outside of the body housing 30.

When flowing through the cooling passage R (specifically, the air passage R2), the cooling wind draws heat not only from the rear surface 121 of the heat radiation member 12 by flowing thereover from the center side toward the outer periphery, but also from the front surface 102 (i.e., a surface reverse with a surface on which the switching elements 11 are mounted) of the circuit board 10 by flowing thereover from the outer peripheral side toward the center. The switching elements 11 are interposed between the heat radiation member 12 and the circuit board 10, and therefore can be effectively cooled from both sides. In addition, because the cooling wind passes through the gap 19 between the rotor 6 and the stator 7, the motor 1 is effectively cooled internally. Note that, in the embodiment, the rib 21 can prevent the cooling wind from flowing between the body housing 30 and the stator 7. Therefore, the cooling wind passed through the first gap 103 is easily directed toward the air passage R3. As a result, at the front surface 102 side of the circuit board, the cooling wind is biased to flow from the outer peripheral side toward the center. Note that the rib 21 is not necessarily to be formed along a whole circumference of the inner surface of the body housing 30 continuously. For example, in a case where the inlets 15 are formed at the right side and the left side of the body housing 30 (see FIG. 2) as in the embodiment, the rib is not necessarily formed at the upper side and the lower side of the body housing 30.

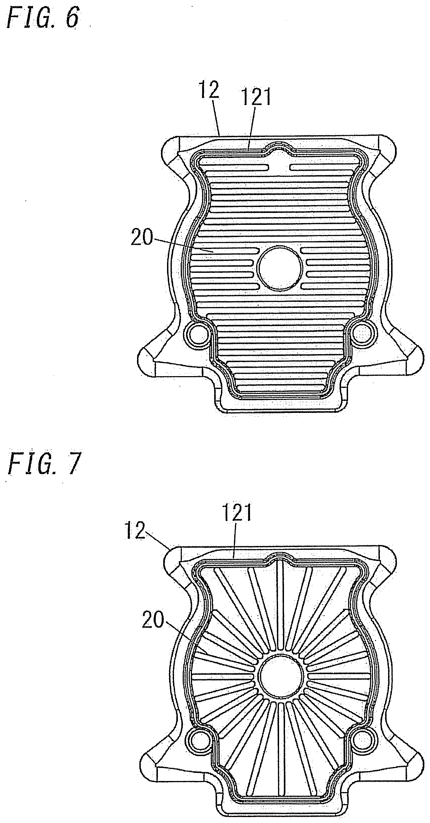

In the embodiment, as shown in FIG. 6, the heat radiation member 12 is provided on the rear surface 121 with a protrusion portion 20. The protrusion portion 20 includes linear protrusions which are elongated along the right-left direction with leaving a predetermined interval therebetween in the up-down direction. That is, in the embodiment, the protrusion portion 20 includes a plurality of linear protrusions arranged in parallel with leaving a predetermined interval therebetween. Each linear protrusion is formed on the rear surface 121 to be elongated from the center side toward the outer periphery (in the right-left direction in the embodiment) such that a longitudinal direction thereof corresponds to the flowing direction at this position in the cooling passage R. With this configuration, the protrusion portion 20 serves to guide and smooth the flow of the cooling wind over the heat radiation member 12. In addition, cooling efficiency can be improved due to increase in heat radiation area.

The protrusion portion 20 may have a radial structure as shown in FIG. 7. In other words, the protrusion portion 20 may include a plurality of linear protrusions arranged radially. Specifically, in this configuration, the plurality of linear protrusions are formed on the rear surface 121 of the heat radiation member 12 so as to be elongated radially from a center part thereof.

As described above, the electric drill-driver 50 as an electric tool according to the embodiment of the invention includes: the brushless motor 1 including the rotor 6 and the cylindrical stator 7 surrounding the rotor 6; the circuit board 10 provided with the switching element 11 for controlling rotation of the rotor 6; the heat radiation member 12 to be transferred heat from the switching element 11; and the cooling fan 9 for generating the cooling wind, which are housed in the body housing 30. The body housing 30 has the cooling passage R for passing therethrough the cooling wind. The cooling passage R is formed so that the cooling wind flows from the center side toward the outer periphery of the heat radiation member 12 and thereafter flows over the surface of the circuit board 10 facing the brushless motor 1 (i.e., over the front surface 102 of the circuit board 10).

With this electric drill-driver 50, the switching element 11 can be efficiently cooled with the cooling wind not only from the heat radiation member 12 side but from the circuit board 10 side, and accordingly it is possible to improve the cooling efficiency. Thus, this configuration can reduce a required degree of the heat radiation property of the switching element 11, and accordingly allow to arrange a number of switching elements 11 in a small space.

Specifically, in the electric drill-driver 50, the circuit board 10 has the first surface (rear surface) 101 and the second surface (front surface) 102 opposite the first surface 101. The heat radiation member 12 is shaped like a plate, and has the first surface (rear surface) 121 and the second surface (front surface) 122 opposite the first surface 121. The circuit board 10 is disposed so that its own second surface 102 faces the brushless motor 1 and that the first gap 103 is formed between its own outer periphery and the inner surface of the body housing 30. The switching element 11 is mounted on the first surface 101 of the circuit board 10. The heat radiation member 12 is disposed so that its own second surface 122 faces the first surface 101 of the circuit board 10 and that the second gap 123 is formed between its own outer periphery and the inner surface of the body housing 30. The cooling passage R is formed so that the cooling wind flows from the center side toward the outer periphery of the heat radiation member 12 at the first surface 101 side of the circuit board 10, and then flows through the second gap 123 and the first gap 103, and thereafter flows along the circuit board 10 at the second surface 102 side of the circuit board 10.

According to this configuration, the switching element 11 can be effectively cooled with the cooling wind from both the heat radiation member 12 side and the circuit board 10 side.

In the electric drill-driver 50, the cooling passage R is formed so that the cooling wind flows through the gap 19 between the stator 7 and the rotor 6 after flowed over the surface of the circuit board 10 facing the brushless motor 1 (i.e., over the front surface 102 of the circuit board 10).

According to this configuration, the motor 1 can be effectively cooled internally.

Moreover, the rotation shaft 8 to which the rotor 6 of the motor 1 is fixed; the bearing 13 which rotatably supports the rotation shaft 8; and the bearing support 14 which supports the bearing 14, are arranged in the body housing 30. The cooling passage R is formed so that the cooling wind flows along the bearing support 14.

According to this configuration, the bearing 13 and the bearing support 14 supporting this can be effectively cooled.

Moreover, the heat radiation member 12 has the protrusion portion 20 elongated along the flowing direction in the cooling passage R.

This configuration enables to efficiently radiate the heat while guiding the cooling wind.

In the electric drill-driver 50, the cooling passage R is formed so that the cooling wind flows toward the center of the heat radiation member 12 in the direction crossing the first surface 121 of the heat radiation member 12.

According to this configuration, the cooling wind is blown toward the heat radiation member 12, thereby cooling the heat radiation member 12 effectively.

Moreover, the body housing 30 is provided on the inner surface thereof with the rib 21 which protrudes toward the motor 1 (stator 7) so as to restrict the flow of the cooling wind.

According to this configuration, the cooling wind is less likely to flow through a region between the stator 7 and the body housing 30. Thus, the cooling wind is directed to flow toward the gap 19 (air passage R3) between the stator 7 and the rotor 6. As a result, the cooling wind is biased to flow from the outer peripheral side toward the center at the front surface 102 side of the circuit board 10, and accordingly can cool the switching element 11 effectively. The motor 1 also can be effectively cooled internally since the cooling wind is flown through the gap 19 between the stator 7 and the rotor 6.

In the electric drill-driver 50, the cooling passage R is formed so that the cooling wind flows in the direction toward the bearing support 14.

According to this configuration, the cooling wind is blown to the bearing support 14, thereby cooling the bearing support 14 and the bearing 13 effectively.

Moreover, because the switching element 11 is thermally coupled with the heat radiation member 12, the switching element 11 can be cooled effectively.

Moreover, the cooling fan 9 is fixed to the rotation shaft 8. This configuration can omit an extra component for driving the cooling fan 9, and accordingly can downsize the tool.

## Claims

1. An electric tool comprising:
a brushless motor (1) comprising a rotor (6) and a cylindrical stator (7) surrounding the rotor (6);
a circuit board (10) provided with a switching element (11) for controlling rotation of the rotor (6);
a heat radiation member (12) for transferring heat from the switching element (11);
a cooling fan (9) for generating a cooling wind; and
a body housing (30) which houses therein the brushless motor (1), the circuit board (10), the heat radiation member (12), and the cooling fan (9), and which has a cooling passage for passing therethrough the cooling wind,
wherein the cooling passage is formed so that the cooling wind flows from a center side toward an outer periphery of the heat radiation member and thereafter flows over a surface of the circuit board facing the brushless motor,
the circuit board (10) has a first surface (101) and a second surface (102) opposite the first surface (101),
the heat radiation member (12) is shaped like a plate, and has a first surface (121) and a second surface (122) opposite the first surface (121),
the circuit board (10) is disposed so that the second surface (102) thereof faces the brushless motor (1) and that a first gap (103) is formed between an outer periphery thereof and an inner surface of the body housing (30),
the switching element (11) is mounted on the first surface (101) of the circuit board (10),
the heat radiation member (12) is disposed so that the second surface (122) thereof faces the first surface (101) of the circuit board (10) and that a second gap (123) is formed between the outer periphery thereof and an inner surface of the body housing (30), and
the cooling passage is formed so that the cooling wind flows from the center side toward the outer periphery of the heat radiation member (12) at the first surface side of the circuit board (10), and then flows through the second and the first gaps (123, 103), and thereafter flows along the circuit board (10) at the second surface side of the circuit board (10).

2. The electric tool as set forth in claim 1, wherein the cooling passage is formed so that the cooling wind flows through a gap (19) between the stator (7) and the rotor (6) after flowed over the surface of the circuit board (10) facing the brushless motor (1).

3. The electric tool as set forth in claim 1 or 2, further comprising: a rotation shaft (8) to which the rotor (6) is fixed; a bearing (13) which rotatably supports the rotation shaft (8); and a bearing support (14) which supports the bearing (13), which are housed in the body housing,
wherein the cooling passage is formed so that the cooling wind flows along the bearing support (14).

4. The electric tool as set forth in any one of claims 1 to 3, wherein the heat radiation member (12) has a protrusion portion (20) elongated along a flowing direction in the cooling passage.

5. The electric tool as set forth in claim 1, wherein the cooling passage is formed so that the cooling wind flows toward the center of the heat radiation member (12) in a direction crossing the first surface (121) of the heat radiation member (12).

6. The electric tool as set forth in claim 1, wherein the body housing (30) is provided on the inner surface thereof with a rib (21) which protrudes toward the stator (7) so as to restrict the flow of the cooling wind.

7. The electric tool as set forth in claim 3, wherein the cooling passage is formed so that the cooling wind flows toward the bearing support (14).

8. The electric tool as set forth in claim 1, wherein the switching element (11) is thermally coupled with the heat radiation member (12).

9. The electric tool as set forth in claim 1, further comprising a rotation shaft (8) to which the rotor (6) is fixed, which is housed in the body housing (30),
wherein the cooling fan (9) is fixed to the rotation shaft (8).

## Patentansprüche

1. Elektrisches Werkzeug, das umfasst:
einen bürstenlosen Motor (1), welcher einen Rotor (6) und einen zylindrischen Stator (7) umfasst, welcher den Rotor (6) umgibt;
eine Schaltungsplatine (10), welche mit einem Schaltelement (11) zum Steuern einer Rotation des Rotors (6) versehen ist;
ein Wärmeabstrahlungsglied (12) zum Übertragen von Wärme aus dem Schaltelement (11);
einen Kühlventilator (9) zum Erzeugen einer Kühlluft; und
ein Rumpfgehäuse (30), welches den bürstenlosen Motor (1), die Schaltungsplatine (10), das Wärmeabstrahlungsglied (12) und den Kühlventilator (9) aufnimmt, und welches einen Kühldurchtritt zum Durchlassen der Kühlluft aufweist,
wobei der Kühldurchtritt so ausgebildet ist, dass die Kühlluft von einer Mittenseite in Richtung auf eine äußere Peripherie des Wärmeabstrahlungsglieds strömt und danach über eine Oberfläche der Schaltungsplatine strömt, welche dem bürstenlosen Motor gegenüber steht,
die Schaltungsplatine (10) eine erste Oberfläche (101) und eine zweite Oberfläche (102) aufweist, welche der ersten Oberfläche (101) entgegengesetzt ist,
das Wärmeabstrahlungsglied (12) wie eine Platte geformt ist und eine erste Oberfläche (121) und eine zweite Oberfläche (122) aufweist, welche der ersten Oberfläche (121) entgegengesetzt ist,
die Schaltungsplatine (10) so angeordnet ist, dass ihre zweite Oberfläche (102) dem bürstenlosen Motor (1) gegenüber steht und dass ein erster Zwischenraum (103) zwischen einer äußeren Peripherie davon und einer Innenfläche des Rumpfgehäuses (30) ausgebildet wird,
das Schaltelement (11) auf der ersten Oberfläche (101) der Schaltungsplatine (10) befestigt ist,
das Wärmeabstrahlungsglied (12) so angeordnet ist, dass seine zweite Oberfläche (122) der ersten Oberfläche (101) der Schaltungsplatine (10) gegenüber steht und dass ein zweiter Zwischenraum (123) zwischen seiner äußeren Peripherie und einer Innenfläche des Rumpfgehäuses (30) ausgebildet wird, und
der Kühldurchtritt so ausgebildet ist, dass die Kühlluft von der Mittenseite in Richtung auf die äußere Peripherie des Wärmeabstrahlungsglieds (12) an der Seite der erste Oberfläche der Schaltungsplatine (10) strömt und dann durch den zweiten und den ersten Zwischenraum (123, 103) strömt und danach entlang der Schaltungsplatine (10) an der Seite der zweiten Oberfläche der Schaltungsplatine (10) strömt.

2. Elektrisches Werkzeug nach Anspruch 1, wobei der Kühldurchtritt so ausgebildet ist, dass die Kühlluft durch einen Zwischenraum (19) zwischen dem Stator (7) und dem Rotor (6) strömt, nachdem sie über die Oberfläche der Schaltungsplatine (10) geströmt ist, welche dem bürstenlosen Motor (1) gegenüber steht.

3. Elektrisches Werkzeug nach Anspruch 1 oder 2, weiterhin Folgendes umfassend: eine Rotationswelle (8), an welcher der Rotor (6) befestigt ist; ein Lager (13), welches die Rotationswelle (8) drehbar stützt; und eine Lagerstütze (14), welche das Lager (13) stützt, welche in dem Rumpfgehäuse untergebracht sind,
wobei der Kühldurchtritt so ausgebildet ist, dass die Kühlluft entlang der Lagerstütze (14) strömt.

4. Elektrisches Werkzeug nach einem der Ansprüche 1 bis 3, wobei das Wärmeabstrahlungsglied (12) einen Vorsprungabschnitt (20) aufweist, welcher entlang einer Strömungsrichtung in dem Kühldurchtritt verlängert ist.

5. Elektrisches Werkzeug nach Anspruch 1, wobei der Kühldurchtritt so ausgebildet ist, dass die Kühlluft in Richtung auf die Mitte des Wärmeabstrahlungsglieds (12) in eine Richtung strömt, welche die erste Oberfläche (121) des Wärmeabstrahlungsglieds (12) quert.

6. Elektrisches Werkzeug nach Anspruch 1, wobei das Rumpfgehäuse (30) auf seiner Innenfläche mit einer Rippe (21) versehen ist, welche in Richtung auf den Stator (7) vorsteht, um so die Strömung der Kühlluft zu begrenzen.

7. Elektrisches Werkzeug nach Anspruch 3, wobei der Kühldurchtritt so ausgebildet ist, dass die Kühlluft in Richtung auf die Lagerstütze (14) strömt.

8. Elektrisches Werkzeug nach Anspruch 1, wobei das Schaltelement (11) mit dem Wärmeabstrahlungsglied (12) thermisch gekoppelt ist.

9. Elektrisches Werkzeug nach Anspruch 1, weiterhin eine Rotationswelle (8) umfassend, an welcher der Rotor (6) befestigt ist, welcher in dem Rumpfgehäuse (30) untergebracht ist,
wobei der Kühlventilator (9) an der Rotationswelle (8) befestigt ist.

## Revendications

1. Outil électrique comprenant :
un moteur sans balai (1) comprenant un rotor (6) et un stator cylindrique (7) entourant le rotor (6) ;
une carte de circuit imprimé (10) prévue avec un élément de commutation (11) pour contrôler la rotation du rotor (6) ;
un élément de rayonnement de chaleur (12) pour transférer la chaleur à partir de l'élément de commutation (11) ;
un ventilateur de refroidissement (9) pour générer un air de refroidissement ; et
un boîtier de corps (30) qui loge, à l'intérieur de ce dernier, le moteur sans balai (1), la carte de circuit imprimé (10), l'élément de rayonnement de chaleur (12) et le ventilateur de refroidissement (9), et qui a un passage de refroidissement pour y faire passer l'air de refroidissement,
dans lequel le passage de refroidissement est formé de sorte que l'air de refroidissement s'écoule à partir d'un côté central vers une périphérie externe de l'élément de rayonnement de chaleur et s'écoule ensuite sur une surface de la carte de circuit imprimé faisant face au moteur sans balai,
la carte de circuit imprimé (10) a une première surface (101) et une seconde surface (102) opposée à la première surface (101),
l'élément de rayonnement de chaleur (12) est formé comme une plaque, et a une première surface (121) et une seconde surface (122) opposée à la première surface (121),
la carte de circuit imprimé (10) est disposée de sorte que sa seconde surface (102) fait face au moteur sans balai (1) et qu'un premier espace (103) est formé entre sa périphérie externe et une surface interne du boîtier de corps (30),
l'élément de commutation (11) est monté sur la première surface (101) de la carte de circuit imprimé (10),
l'élément de rayonnement de chaleur (12) est disposé de sorte que sa seconde surface (122) fait face à la première surface (101) de la carte de circuit imprimé (10) et qu'un second espace (123) est formé entre sa périphérie externe et une surface interne du boîtier de corps (30), et
le passage de refroidissement est formé de sorte que l'air de refroidissement s'écoule à partir d'un côté central vers la périphérie externe de l'élément de rayonnement de chaleur (12) du côté de la première surface de la carte de circuit imprimé (10) et s'écoule ensuite à travers le second et le premier espace (123, 103) et après quoi, s'écoule le long de la carte de circuit imprimé (10) du côté de la seconde surface de la carte de circuit imprimé (10).

2. Outil électrique selon la revendication 1, dans lequel le passage de refroidissement est formé de sorte que l'air de refroidissement s'écoule à travers un espace (19) entre le stator (7) et le rotor (6) après s'être écoulé sur la surface de la carte de circuit imprimé (10) faisant face au moteur sans balai (1).

3. Outil électrique selon la revendication 1 ou 2, comprenant en outre : un arbre de rotation (8) sur lequel le rotor (6) est fixé ; un palier (13) qui supporte, en rotation, l'arbre de rotation (8) ; et un support de palier (14) qui supporte le palier (13), qui sont logés dans le boîtier de corps,
dans lequel le passage de refroidissement est formé de sorte que l'air de refroidissement s'écoule le long du support de palier (14).

4. Outil électrique selon l'une quelconque des revendications 1 à 3, dans lequel l'élément de rayonnement de chaleur (12) a une partie de saillie (20) allongée le long d'une direction d'écoulement dans le passage de refroidissement.

5. Outil électrique selon la revendication 1, dans lequel le passage de refroidissement est formé de sorte que l'air de refroidissement s'écoule vers le centre de l'élément de rayonnement de chaleur (12) dans une direction traversant la première surface (121) de l'élément de rayonnement de chaleur (12).

6. Outil électrique selon la revendication 1, dans lequel le boîtier de corps (30) est prévu sur sa surface interne, avec une nervure (21) qui fait saillie vers le stator (7) afin de limiter l'écoulement de l'air de refroidissement.

7. Outil électrique selon la revendication 3, dans lequel le passage de refroidissement est formé de sorte que l'air de refroidissement s'écoule vers le support de palier (14).

8. Outil électrique selon la revendication 1, dans lequel l'élément de commutation (11) est thermiquement couplé avec l'élément de rayonnement de chaleur (12).

9. Outil électrique selon la revendication 1, comprenant en outre un arbre de rotation (8) sur lequel le rotor (6) est fixé, qui est logé dans le boîtier de corps (30),
dans lequel le ventilateur de refroidissement (9) est fixé sur l'arbre de rotation (8).
